# EUROPÄISCHE PATENTSCHRIFT

(11) **EP 2 747 997 B1**
(45) Veröffentlichungstag und Bekanntmachung des Hinweises auf die Patenterteilung: **09.03.2016**
(21) Anmeldenummer: 12756651.1
(22) Anmeldetag: 15.08.2012
(51) Int. Cl.: B32B 27/08, B32B 27/32, C08L 23/06

(54) **EINE LINEAR WEITERREISSBARE MEHRSCHICHTFOLIE**
MULTIPLE LAYER FILM CAPABLE OF A LINEAR TEAR PROPAGATION
FEUILLE MULTICOUCHE APTE À UNE DÉCHIRURE LINÉAIRE

(30) Priorität: 23.08.2011 DE 102011110839; 15.12.2011 DE 102011121143
(43) Veröffentlichungstag der Anmeldung: 02.07.2014
(73) Patentinhaber: Infiana Germany GmbH & Co. KG, 91301 Forchheim (DE)
(72) Erfinder: SCHUHMANN, Michael, D-90613 Grosshabersdorf (DE); HUMMEL, Henrik, 04229 Leipzig (DE); KELM, Roland, 91301 Forchheim-Kersbach (DE)
(74) Vertreter: Kutzenberger, Helga
(86) Internationale Anmeldenummer: PCT/EP2012/003467
(87) Internationale Veröffentlichungsnummer: WO 2013/026544

(56) Entgegenhaltungen:
- DATABASE WPI Week 200748 Thomson Scientific, London, GB; AN 2007-485782 XP002684979, -& JP 2007 076300 A (DAINIPPON INK & CHEM INC) 29. März 2007 (2007-03-29)

## Beschreibung

Die vorliegende Erfindung betrifft eine Mehrschichtfolie umfassend eine Schichtfolge aus einer Schicht (a) basierend auf wenigstens einem Polyethylen mit einer niedrigen Dichte (LDPE) im Bereich von 0,915 bis 0,930 g/cm³ oder einer Mischung aus (α) wenigstens einem Polyethylen mit einer niedrigen Dichte (LDPE) im Bereich von 0,915 bis 0,930 g/cm³ und aus (β) wenigstens einem nicht cyclischen C₂ - C₆ Olefin Homo- oder Copolymeren, das sich von der Polyethylen-Komponente (α) unterscheidet, einer Schicht (b) basierend auf einer Mischung aus wenigstens einem Polyethylen mit einer niedrigen Dichte (LDPE) im Bereich von 0,915 bis 0,930 g/cm³ und wenigstens einem Cyclo-Olefin-Copolymeren, und einer Schicht (c) basierend auf wenigstens einem Polyethylen mit einer niedrigen Dichte (LDPE) im Bereich von 0,915 bis 0,930 g/cm³ oder einer Mischung aus (α) wenigstens einem Polyethylen mit einer niedrigen Dichte (LDPE) im Bereich von 0,915 bis 0,930 g/cm³ und aus (β) wenigstens einem nicht cyclischen C₂ - C₆ Olefin Homo- oder Copolymeren, das sich von der Polyethylen-Komponente (α) unterscheidet.

Aus dem Stand der Technik, wie z. B. aus GB 2 397 065 A sind bereits linear weiterreißbare Mehrschichtfolien bekannt, die sich zur Herstellung von Verpackungen eignen. Diese Mehrschichtfolien weisen eine geringe Weiterreißkraft in Maschinenrichtung auf, während die Weiterreißkraft quer zur Maschinenrichtung deutlich höher ist.

Die Verarbeitung solcher Mehrschichtfolien zu Verpackungen ist somit dadurch eingeschränkt, dass durch die geringere Weiterreißkraft die Aufreißrichtung einer aus einer solchen Mehrschichtfolie hergestellten Verpackung und damit die Konfektionierung der Folie zur Verpackung vorgegeben ist.

Ferner weisen die aus dem Stand der Technik bekannten, linear reißfähigen Mehrschichtfolien oftmals ungeeignete mechanische Eigenschaften wie eine zu geringe Durchstoßfestigkeit sowie ein ungenügend lineares Ein- und Weiterreißverhalten auf.

Insbesondere Mehrschichtfolien als Material für Verpackungen wie z.B. Einwegverpackungen, sollten jedoch ein möglichst fortlaufend lineares Ein- und Weiterreißverhalten aufweisen, um ein unkontrolliertes Aufreißen und einen ggf. dadurch verursachten ungeeigneten Zugang zum verpackten Gut zu vermeiden. Darüber hinaus ist eine möglichst hohe Durchstoßfestigkeit des Verpackungsmaterials von Vorteil, um die Handhabung der aus den Mehrschichtfolien hergestellten Verpackungen zu erleichtern. Dies gilt insbesondere deshalb, weil das mit den Mehrschichtfolien verpackte Gut üblicherweise während der Lagerung und beim Transport übereinander geschichtet oder gestapelt wird und die Verpackungen dabei versehentlich durchstoßen werden können. Damit steigt die Zahl der Ausschussware.

Es besteht daher ein Bedarf an Mehrschichtfolien, die sich durch ein sehr gutes gerades und lineares Weiterreißverhalten in Längs- und Querrichtung sowie durch eine sehr gute Durchstoßfestigkeit auszeichnen.

Eine Mehrschichtfolie für aufreißbare Verpackungen mit der eingangs genannten Schichtfolge wird in JP 2007 076300 A beschrieben.

Aufgabe der vorliegenden Erfindung war es, eine Mehrschichtfolie zur Verfügung zu stellen, die sich durch gute mechanische Eigenschaften wie eine geringe Weiterreißkraft in Längs- und Querrichtung und eine gute

Durchstoßfestigkeit, sowie durch eine möglichst geringe Abweichung von einem geraden, linearen Reißen bzw. Weiterreißen auszeichnet.

Diese Aufgabe wird durch die Bereitstellung der erfindungsgemäßen Mehrschichtfolie umfassend eine Schichtfolge aus
(a) einer Schicht (a) basierend auf wenigstens einem Polyethylen mit einer niedrigen Dichte (LDPE) im Bereich von 0,915 bis 0,930 g/cm³ oder einer Mischung aus (α) wenigstens einem Polyethylen mit einer niedrigen Dichte (LDPE) im Bereich von 0,915 bis 0,930 g/cm³ und aus (β) wenigstens einem nicht cyclischen C₂ - C₆ Olefin Homo- oder Copolymeren, das sich von der Polyethylen-Komponente (α) unterscheidet,
(b) einer Schicht (b) basierend auf einer Mischung aus wenigstens einem Polyethylen mit einer niedrigen Dichte (LDPE) im Bereich von 0,915 bis 0,930 g/cm³ und wenigstens einem Cyclo-Olefin-Copolymeren, und
(c) einer Schicht (c) basierend auf wenigstens einem Polyethylen mit einer niedrigen Dichte (LDPE) im Bereich von 0,915 bis 0,930 g/cm³ oder einer Mischung aus (α) wenigstens einem Polyethylen mit einer niedrigen Dichte (LDPE) im Bereich von 0,915 bis 0,930 g/cm³ und aus (β) wenigstens einem nicht cyclischen C₂ - C₆ Olefin Homo- oder Copolymeren, das sich von der Polyethylen-Komponente (α) unterscheidet,
dadurch gekennzeichnet, dass die Schicht (a) bzw. die Schicht (c) jeweils eine Schichtdicke von 5 µm bis 25 µm und die Schicht (b) eine Schichtdicke von 5 µm bis 30 µm aufweist, wobei die Weiterreißkraft der Mehrschichtfolie sowohl in Maschinenrichtung als auch quer zur Maschinenrichtung höchstens 1000 mN und das Verhältnis der Weiterreißkraft in Maschinenrichtung zur Weiterreißkraft quer zur Maschinenrichtung von 2 : 1 bis 1 : 2, jeweils bestimmt nach dem Elmendorf-Test gemäß DIN EN ISO 6383-2, beträgt, gelöst.

Der Begriff "Schichtfolge" bedeutet im Sinne der Erfindung, dass die Schichten a), b) und c) in der aufgeführten Reihenfolge vorliegen und direkt aneinander angrenzend vorliegen. Zusätzliche Schichten können ggf. auf einer Oberfläche der Schichtfolge vorhanden sein.

Der Begriff "Polyethylen mit einer niedrigen Dichte" im Sinne der Erfindung ist gleichbedeutend mit "Polyethylen niedriger Dichte" bzw. "LDPE", d. h. mit diesem Begriff wird unverschäumtes Polyethylen niedriger Dichte bezeichnet, welches sich durch einen hohen Verzweigungsgrad der Moleküle auszeichnet, d. h. die Polymethylenhauptkette trägt 8 - 40 Seitenketten aus wiederkehrenden Methyleneinheiten und weist keine polymerisierten Einheiten von anderen Olefinen auf.

Unter dem Begriff "Cyclo-Olefin-Copolymer" bzw. "COC" wird im Sinne der vorliegenden Erfindung ein amorphes Copolymer verstanden, welches durch Copolymerisation von cyclischen (C₆-C₁₂)-Olefin-Monomeren, vorzugsweise Norbornen oder Tetracyclododecen mit einem (C₂-C₄)-Olefin wie Ethylen hergestellt wird.

Mit dem Begriff "Maschinenrichtung" wird erfindungsgemäß die Produktionsrichtung verstanden, in der die Mehrschichtfolie hergestellt und ggf. aufgerollt wird.

Unter dem Begriff "basierend auf" wird erfindungsgemäß, "ist aufgebaut aus" verstanden.

In einer bevorzugten Ausführungsform beträgt die Weiterreißkraft der erfindungsgemäßen Mehrschichtfolie sowohl in Maschinenrichtung als auch quer zur Maschinenrichtung höchstens 800 mN, bestimmt nach dem Elmendorf-Test gemäß DIN EN ISO 6383-2.

Weiterhin bevorzugt weist die erfindungsgemäße Mehrschichtfolie ein Verhältnis der Weiterreißkraft in Maschinenrichtung zur Weiterreißkraft quer zur Maschinenrichtung von 1,5 : 1 bis 1 : 1,5, bestimmt nach dem Elmendorf-Test gemäß DIN EN ISO 6383-2, auf.

Die erfindungsgemäße Mehrschichtfolie zeichnet sich auch durch eine hohe Durchstoßfestigkeit, vorzugsweise von mindestens 50 N, besonders bevorzugt mindestens 53 N, bestimmt nach ASTM E 154-88 Teil 10, aus.

In einer bevorzugten Ausführungsform weist das Polyethylen (LDPE) der Schichten (a), (b) und (c) jeweils eine Dichte im Bereich von 0,920 bis 0,927 g/cm³ auf. Vorzugsweise ist die Schmelztemperatur des Polyethylens der Schichten (a), (b) und (c) höchstens 118 °C, besonders bevorzugt höchstens 116 °C, bestimmt gemäß DIN EN ISO 3146.

Sowohl die Schicht (a) als auch die Schicht (c) können, gleich oder verschieden voneinander, aus einer Mischung (α) aus wenigstens einem Polyethylen mit einer niedrigen Dichte (LDPE) im Bereich von 0,915 bis 0,930 g/cm³, vorzugsweise von 0,920 bis 0,927 g/cm³, und aus (β) wenigstens einem, von der (α) Polyethylen-Komponente unterschiedlichen, nicht cyclischen C₂ - C₆ Olefin Homo- oder Copolymeren, vorzugsweise einem Ethylen oder Propylen Homo- oder Copolymeren, besonders bevorzugt einem Polypropylen und/oder Ethylen/Propylen Copolymeren, als die Polymer-Komponenten der jeweiligen Schicht aufgebaut sein.

Vorzugsweise besteht die Polymermischung aus wenigstens 50 Gew.%, besonders bevorzugt aus wenigstens 70 Gew.% bis zu 95 Gew.%, jeweils bezogen auf das Gesamtgewicht der Polymermischung (α) und (β), aus der Polyethylen-Komponente (α).

Vorzugsweise ist zumindest eine der Schichten (a) und (c) eine Oberflächenschicht der erfindungsgemäßen Mehrschichtfolie und vorzugsweise heißsiegelfähig.

Die Schichten (a) und (c) können gleich oder verschieden, vorzugsweise gleich sein. Die Schicht (a) bzw. die Schicht (c) der erfindungsgemäßen Mehrschichtfolie weist vorzugsweise eine Schichtdicke von 15 µm bis 25 µm auf.

In einer bevorzugten Ausführungsform der erfindungsgemäßen Mehrschichtfolie weisen die Schicht (a) und die Schicht (c) einen identischen Schichtaufbau, vorzugsweise eine identische Schichtdicke und/oder eine identische Zusammensetzung der Polymer-Komponente bzw. Polymer-Komponenten auf.

Die Schicht (b) der erfindungsgemäßen Mehrschichtfolie basiert auf einer Mischung aus wenigstens einem Polyethylen mit einer niedrigen Dichte (LDPE) im Bereich von 0,915 bis 0,930 g/cm³, vorzugsweise 0,920 bis 0,927 g/cm³, und wenigstens einem Cyclo-Olefin-Copolymeren.

In einer bevorzugten Ausführungsform ist das Cycloolefin-Copolymere ein Copolymeres aus wenigstens einem (C₆-C₁₂)-Cycloolefin- und einem nichtcyclischen (C₂-C₄)-Olefin, vorzugsweise ein Norbomen/Ethylen-Copolymeres oder ein Tetracyclododecen/Ethylen-Copolymeres, besonders bevorzugt ein Norbomen/Ethylen-Copolymeres.

In einer bevorzugten Ausführungsform weist das Cycloolefin-Copolymere eine Glasübergangstemperatur T_{g} von wenigstens 60°C, vorzugsweise mindestens 80°C und ganz besonders bevorzugt mindestens 100°C, bestimmt nach ISO 11357-1,-2,-3 (DSC), aufweist.

Vorzugsweise beträgt der Anteil des Cycloolefins im Cycloolefin-Copolymeren mindestens 50 Gew.%, besonders bevorzugt mindestens 70 Gew.%, bezogen auf das Gesamtgewicht des Cycloolefin-Copolymeren.

In einer besonderen Ausführungsform beträgt der Anteil der Cycloolefin-Copolymer Komponente in der Schicht (b) höchstens 50 Gew.%, bevorzugt höchstens 40 Gew.-%, und besonders bevorzugt 20-35 Gew.%, bezogen auf das Gesamtgewicht der Polymer-Komponenten.

Vorzugsweise weist die Schicht (b) eine Schichtdicke von 15 µm bis 30 µm auf.

Die Schichtdicke der Schicht (b) beträgt vorzugsweise mindestens 20%, besonders bevorzugt 25-75%, bezogen auf die Gesamtdicke der Schichtfolge (a)-(c). Vorzugsweise beträgt die Gesamtdicke der Schichtfolge (a)-(c) mindestens 30%, besonders bevorzugt 50% bis 100%, bezogen auf die Gesamtdicke der erfindungsgemäßen Mehrschichtfolie.

Die Herstellung der erfindungsgemäßen Mehrschichtfolie kann nach beliebigen Herstellungsverfahren, wie z. B. durch Laminierung, Extrusion, vorzugsweise durch Co-Extrusion, ganz besonders bevorzugt durch Blasfolien-Co-Extrusion erfolgen.

In einer weiteren Ausführungsform kann die erfindungsgemäße Mehrschichtfolie als jeweilige Einzelschichten, als Teilverbund oder als gesamte Mehrschichtfolie in Form einer Schlauchfolie produziert und verarbeitet werden.

In einer weiteren bevorzugten Ausführungsform wird zumindest die Schichtfolge (a)-(c) in Form eines vorzugsweise coextrudierten Folienschlauches produziert.

Dabei kann die coextrudierte Schichtfolge (a)-(c) vorzugsweise ein Aufblasverhältnis von mindestens 1:1, besonders bevorzugt von mindestens 1,5 : 1 ganz besonders bevorzugt von mindestens 2:1, aufweisen.

In einer weiteren Ausführungsform kann die Mehrschichtfolie auch als Laminat umfassend die coextrudierte Schichtfolge (a)-(c) und ggf. mindestens eine weitere Schicht produziert werden.

Als weitere Schicht kann eine Barriereschicht (d) und/oder eine Schicht (e) basierend auf mindestens einem thermoplastischen Polymeren als Trägerschicht vorliegen, wobei die Barriereschicht ggf. jeweils über eine Haftvermittlerschicht mit den übrigen Schichten des Folienverbundes verbunden ist.

In einer weiteren bevorzugten Ausführungsform liegt die gesamte Mehrschichtfolie in Form eines vorzugsweise coextrudierten Folienschlauches vor, die ggf. zu einer flachgelegten Folie verarbeitet werden kann.

Besonders bevorzugt wird die erfindungsgemäße Mehrschichtfolie als eine Mehrschicht-Blasfolie, bevorzugt durch Extrusion, insbesondere durch Blasfolien-Coextrusion hergestellt.

In einer weiteren Ausführungsform kann die Mehrschichtfolie teilweise oder insgesamt als eine Castfolie hergestellt und verarbeitet werden.

Vorzugsweise ist die als Castfolie hergestellte Mehrschichtfolie zumindest monoaxial in einem Reckverhältnis von mindestens 1:1,5, besonders bevorzugt von mindestens 1: 2, besonders bevorzugt 1 : 2 bis 1 : 4, gereckt.

In einer bevorzugten Ausführungsform wurde die als Castfolie hergestellte Mehrschichtfolie monoaxial in Längsrichtung in einem Reckverhältnis von 1 : 1,5 bis 1 : 10, besonders bevorzugt 1 : 2 bis 1 : 4 gereckt.

In einer anderen bevorzugten Ausführungsform ist die als Castfolie hergestellte Mehrschichtfolie biaxial mit einem Verhältnis von Längs- zu Querreckung von vorzugsweise mindestens 1 : 1, besonders bevorzugt mindestens 1,1 : 1 und ganz besonders bevorzugt mindestens 1,2 : 1 gereckt.

Wie vorstehend ausgeführt können einzelne oder sämtliche Schichten der erfindungsgemäßen Mehrschichtfolie durch (Co)-Extrusion, vorzugsweise als Flachfilmextrudate (=Cast-Filme) oder als ggf. mehrschichtige Schlauchfilme hergestellt werden. Die extrudierten Filme können dabei während der Herstellung oder vorzugsweise unmittelbar nach der Extrusion im notwendigen Ausmaß gereckt werden.

Werden einzelne Schichten der erfindungsgemäßen Mehrschichtfolie nach einem der vorstehenden Verfahren separat hergestellt oder weisen einzelne Schichten keine ausreichende Verbundhaftung auf, so kann zum weiteren Aufbau der Mehrschichtfolie eine Haftvermittlerschicht notwendig sein. Diese kann z.B. als Schmelze oder als eine flüssige Zubereitung, zum Beispiel als Lösung oder Dispersion, nach üblichen Methoden wie Sprühen oder Gießen auf eine der zu verbindenden Schichten der erfindungsgemäß zum Einsatz kommenden Mehrschichtfolie, wie z.B. auf die Schicht (c) aufgebracht und mit einer der weiteren Schichten verbunden werden. Alternativ kann die Haftvermittlerschicht ggf. auch auf die Schicht (c) durch Extrusion aufgebracht und unmittelbar mit einer weiteren Schicht wie einer Barriereschicht oder einem Schichtverbund verbunden werden.

Wie bereits ausgeführt, kann die erfindungsgemäße Mehrschichtfolie neben der Schichtfolge (a)-(c) weitere Schichten enthalten. Je nach Art dieser Schichten können diese mit der Schichtfolge (a)-(c) coextrudiert werden oder auf die Schichtfolge (a)-(c) laminiert werden.

So kann die erfindungsgemäße Mehrschichtfolie neben der Schichtfolge (a)-(c) eine Barriereschicht (d) aufweisen.

Vorzugsweise dient diese Barriereschicht (d) als eine Gasbarriereschicht, besonders bevorzugt eine Sauerstoffbarriereschicht und/oder eine Wasserdampfbarriereschicht.

Die Barriereschicht (d) kann vorzugsweise auf wenigstens einem Ethylen-Vinylalkohol-Copolymeren, wenigstens einem Polyvinylalkohol, wenigstens einem Metall, vorzugsweise Aluminium, oder wenigstens einem Metalloxid, vorzugsweise SiOx oder Aluminiumoxid basieren, wobei das Metall als Folie vorliegen kann oder wie ein Metalloxid aufgedampft sein kann.

Die Barriereschicht (d) kann auf einem Ethylen-Vinylalkohol-Copolymeren (EVOH) basieren, das durch im wesentlichen vollständige Hydrolyse von einem entsprechenden, Ethylen-haltigen Polyvinylacetat (EVAc) erhalten wurde. Diese vollverseiften ethylenhaltige Polyvinylacetate weisen einen Verseifungsgrad ≥ 98 % und einem Ethylen-Anteil von 0,01-80 mol-%, vorzugsweise von 1-50 mol-% auf.

Die Barriereschicht (d) kann auch auf einem Polyvinylalkohol basieren, der durch im wesentlichen vollständige Hydrolyse von einem Polyvinylacetat (PVA) gewonnen wurde und als vollverseiftes Polyvinylacetat einen Verseifungsgrad ≥ 98 % aufweist.

Sofern als Barriereschicht (d) ein Metall eingesetzt wurde, ist dieses bevorzugt Aluminium, das aufgedampft wurde.

Die Barriereschicht (d) weist vorzugsweise eine Schichtdicke von 1 µm bis 100 µm, bevorzugt von 2 µm bis 80 µm, besonders bevorzugt von 3 µm bis 60 µm, ganz besonders bevorzugt von 4 µm bis 40 µm auf, wobei die Schichtdicke eines aufgedampften Metalls oder Metalloxides im A-Bereich liegt.

Die erfindungsgemäße Mehrschichtfolie kann neben der Schichtfolge (a)-(c) und einer gegebenenfalls vorhandenen Barriereschicht (d) gegebenenfalls eine Schicht (e) basierend auf wenigstens einem thermoplastischen Polymeren als Trägerschicht aufweisen.

Zur Herstellung der Schicht (e) eignen sich vorzugsweise thermoplastische Polymere ausgewählt aus der Gruppe umfassend Polyolefine, Polyamide, Polyester, Polystyrole und Copolymere aus wenigstens zwei Monomeren der genannten Polymere, besonders bevorzugt Olefin-Homo- oder Copolymere und/oder Polyester.

Die erfindungsgemäße Mehrschichtfolie kann ggf. an wenigstens einer ihrer Oberflächen eine Releaseschicht, vorzugsweise basierend auf wenigstens einem Polysiloxan, aufweisen, vorzugsweise wenn sie nicht als Verpackungsmaterial dient.

Die erfindungsgemäße Mehrschichtfolie kann ggf. auch auf beiden Oberflächen eine Releaseschicht, vorzugsweise basierend auf wenigstens einem Polysiloxan, aufweisen, wenn die Mehrschichtfolie ggf. nicht als Verpackungsmaterial dient.

Unter dem Begriff "Polysiloxan" werden im Sinne der vorliegenden Erfindung Verbindungen verstanden, deren Polymerketten abwechselnd aus Silicium- und Sauerstoffatomen aufgebaut sind. Ein Polysiloxan basiert auf n wiederkehrenden Siloxan-Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht. Vorzugsweise basiert das erfindungsgemäße ausgehärtete Polysiloxan auf einer wiederkehrenden Dialkylsiloxan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden. Vorzugsweise weist das erfindungsgemäß eingesetzte Polysiloxan eine vernetzte ring- oder kettenförmige, besonders bevorzugt eine vernetzte kettenförmige Struktur auf, welche durch (D)-, (T)-, und/oder (Q)-Einheiten zu einem zwei-oder dreidimensionalen Netzwerk verknüpft ist. Die Anzahl n der wiederkehrenden Siloxan-Einheiten [Si(R₂)-O]-)ₙ in der Polysiloxankette wird als Polymerisationsgrad des Polysiloxans bezeichnet.

Die ggf. vorhandene Releaseschicht basiert vorzugsweise auf wenigstens einem ausgehärteten, d. h. vernetzten Polysiloxan ausgewählt aus der Gruppe umfassend additionsvemetzte, vorzugsweise metallkatalysiert additionsvernetzte, kondensationsvernetzte, radikalisch vernetzte, kationisch vernetzte und/oder durch Feuchtigkeitseinwirkung vernetzte Polysiloxane.

Vorzugsweise basiert die Releaseschicht auf wenigstens einem ausgehärteten Polysiloxan, das durch thermische Aushärtung, durch Aushärtung mit elektromagnetischer Strahlung, vorzugsweise durch UV-Strahlung, oder durch Feuchtigkeitseinwirkung ausgehärtet wurde. Bevorzugt basiert die Releaseschicht der erfindungsgemäßen Mehrschichtfolie auf wenigstens einem ausgehärteten Polysiloxan ausgewählt aus der Gruppe umfassend Polydialkylsiloxane, vorzugsweise Polydimethylsiloxane, und Polyalkylarylsiloxane, vorzugsweise Polymethylphenylsiloxane, die durch UV-Strahlung ausgehärtet wurden.

Die ggf. vorhandene Releaseschicht der erfindungsgemäßen Mehrschichtfolie weist vorzugsweise eine Schichtdicke von 0,1 µm bis ≤ 3 µm, vorzugsweise von 0,2 µm bis 1,5 µm auf.

Die Schicht (a), die Schicht (b), die Schicht (c) sowie die ggf. vorhandene Barriereschicht (d), Trägerschicht (e), und die ggf. vorhandenen Haftvermittlerschichten aus den angegebenen Polymer-Komponenten können, wenn notwendig, jeweils unabhängig voneinander mit Additiven ausgewählt aus der Gruppe umfassend Antioxidantien, Antiblockmittel, Antifogmittel, Antistatika, antimikrobielle Wirkstoffe, Lichtschutzmittel, UV-Absorber, UV-Filter, Farbstoffe, Farbpigmente, Stabilisierungsmittel, vorzugsweise Hitze-Stabilisatoren, Prozess-Stabilisatoren und UV- und/oder Licht-Stabilisatoren, vorzugsweise basierend auf wenigstens einem sterisch gehinderten Amin (HALS), Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, und Dispergiermittel, dotiert sein.

Dabei ist zu beachten, dass durch die Zugabe von Additiven bzw. ihrer Menge das Weiterreißverhalten der erfindungsgemäßen Mehrschichtfolie nicht verschlechtert wird.

Die Schicht (a), die Schicht (b), die Schicht (c) sowie die ggf. vorhandenen Schichten (d) und (e) und die ggf. vorhandenen Haftvermittlerschichten können, jeweils unabhängig voneinander, wenigstens 0,01-30 Gew.-%, vorzugsweise wenigstens 0,1-20 Gew.-%, jeweils bezogen auf das Gesamtgewicht einer einzelnen Schicht, wenigstens eines der vorstehend genannten Additive enthalten. Dazu können die Additive in Form eines master batch in Polyolefinen oder Olefincopolymeren in die jeweilige Schicht eingearbeitet werden.

Die erfindungsgemäße Mehrschichtfolie kann bedruckt und/oder eingefärbt und/oder geprägt sein.

Die erfindungsgemäße Mehrschichtfolie kann ggf. auf wenigstens einer ihrer Oberflächen ggf. nur teilweise mit einer Klebeschicht ausgerüstet sein.

Als geeignete Klebstoffe der Klebeschicht eignen sich beispielsweise Haftkleber auf der Basis von Acrylaten, Naturkautschuken, Styrol-Isopren-Styrol-Blockcopolymeren und Klebstoffe auf Silikonbasis, wie z. B. Polydimethylsiloxan und Polymethylphenylsiloxan.

Die erfindungsgemäße Mehrschichtfolie eignet sich vorzugsweise als Verpackungsmaterial.

Ein weiterer Gegenstand der Erfindung ist daher die Verwendung einer erfindungsgemäßen Mehrschichtfolie als Verpackungsmaterial.

Ein weiterer Gegenstand der Erfindung ist daher die Verwendung einer erfindungsgemäßen Mehrschichtfolie zur Herstellung eines Verpackungselements.

Die erfindungsgemäße Mehrschichtfolie eignet sich insbesondere zur Herstellung eines Verpackungselements und/oder einer Verpackung, vorzugsweise einer Beutelverpackung, einer Einzelportionsverpackung, eines Sachets oder eines Stickpacks.

Ein weiterer Gegenstand der Erfindung ist daher die Verwendung einer erfindungsgemäßen Mehrschichtfolie zur Herstellung einer Verpackung, vorzugsweise einer Beutelverpackung, einer Einzelportionsverpackung, eines Sachets oder eines Stickpacks.

Ein weiterer Gegenstand der Erfindung ist daher eine Verpackung in Form einer Beutelverpackung, einer Einzelportionsverpackung, eines Sachets oder eines Stickpacks aus einer erfindungsgemäßen Mehrschichtfolie.

Die erfindungsgemäße Mehrschichtfolie wird vorzugsweise zur Herstellung von leicht zu öffnenden Verpackungen verwendet.

Ein weiterer Gegenstand der Erfindung ist daher eine leicht zu öffnende Verpackung aus einer erfindungsgemäßen Mehrschichtfolie. Aus einer solchen Verpackung kann das verpackte Gut problemlos entnommen werden, da es beim Auf- und Weiterreißen der Verpackung zu einem geraden, linearen Verlauf des Risses kommt. Die Gefahr eines Verschüttens oder Verstreuens des verpackten Gutes ist damit minimiert.

Die erfindungsgemäße Mehrschichtfolie eignet sich vorzugsweise zur Herstellung eines leicht zu öffnenden Verpackungselementes, z. B. als Deckel einer zweiteiligen Verpackung. Eine solche erfindungsgemäße zweiteilige Verpackung umfasst den Deckel aus einer erfindungsgemäßen Mehrschichtfolie und einen Behälter, der vorzugsweise als Mulde aus thermogeformtem Kunststoff ausgebildet ist.

Ein weiterer Gegenstand der Erfindung ist daher ein leicht zu öffnendes Verpackungselement, vorzugsweise ein Deckel, aus der erfindungsgemäßen Mehrschichtfolie.

Eine erfindungsgemäße Verpackung zeichnet sich dadurch aus, dass sie ein leichtes und gerades, lineares Weiterreißverhalten unabhängig von der Produktionsrichtung der verwendeten, erfindungsgemäßen Mehrschichtfolie zeigt, d. h. sowohl in Maschinenrichtung als auch quer dazu, und somit leicht zu öffnen ist. Für das Aufreißen einer erfindungsgemäßen Verpackung kann ggf. eine Kerbe oder Schwächung angebracht werden. Wenn eine Kerbe oder Schwächung angebracht wird, so sollte diese vorzugsweise im Siegelnahtbereich in Aufreißrichtung vorliegen.

Die erfindungsgemäße Verpackung zeichnet sich ferner dadurch aus, dass sie eine hohe Durchstoßfestigkeit hat, wodurch sie besser zu handhaben ist, d. h. dass sie bei Lagerung, Transport und Verkauf durch Einwirkung von Stößen weniger leicht beschädigt werden kann im Vergleich zu Folien mit ähnlichem Weiterreißverhalten.

In einer anderen bevorzugten Ausführungsform eignet sich eine erfindungsgemäße Mehrschichtfolie auch als Trennfolie.

Ein weiterer Gegenstand der Erfindung ist daher die Verwendung einer erfindungsgemäßen Mehrschichtfolie als Trennfolie, insbesondere mit einer Releaseschicht als Oberflächenschicht.

Da es bei solchen Einsätzen u.a. darauf ankommt, dass die Trennfolie ggf. mit dem geschützten Substrat in der gewünschten Länge leicht und im geraden, linearen Verlauf abgetrennt werden kann, ist die erfindungsgemäße Mehrschichtfolie aufgrund ihres Ab- bzw. Weiterreißverhaltens als Trenn- und Schutzfolie besonders geeignet.

In einer solchen Ausführungsform kann die erfindungsgemäße Mehrschichtfolie als Schutz- und Trennfolie für Klebebänder verwendet werden.

Ein weiterer Gegenstand der Erfindung ist daher die Verwendung einer erfindungsgemäßen Mehrschichtfolie als Schutz- und Trennfolie für Klebebänder.

### Bestimmung der Weiterreißfestigkeit

Die Weiterreißkraft (Weiterreißfestigkeit) in Maschinenrichtung (MD) und quer zur Maschinenrichtung (CD) der erfindungsgemäßen Mehrschichtfolie wird jeweils mit Hilfe des Elmendorf-Verfahrens nach ISO 6383-2 bei einer Gesamtschichtdicke von 60 µm bestimmt und in [mN] angegeben.

### Bestimmung der Durchstoßfestigkeit

Die Durchstoßfestigkeit der erfindungsgemäßen Mehrschichtfolie wird nach ASTM E 154-88 Teil 10 bestimmt und in [N] angegeben.

### Bestimmung des geraden, linearen Weiterreißverhaltens

Die Beurteilung eines geraden, linearen Weiterreißverhalten der erfindungsgemäßen Mehrschichtfolie erfolgt durch Messung der Abweichung von einem geraden, linearen Verlauf beim Reißen (Weiter- bzw. Abreißen). Diese wird in [mm] angegeben.

Aus einer erfindungsgemäßen Mehrschichtfolie, deren Weiterreißverhalten ermittelt werden soll, werden jeweils 10 Proben derart zugeschnitten, dass sie eine Länge von 100 mm parallel zur Maschinenrichtung (MD) und eine Breite von 50 mm quer zur Maschinenrichtung (CD) aufweisen. Ferner werden 10 Proben derart zugeschnitten, dass sie eine Länge von 100 mm quer zur Maschinenrichtung (CD) und eine Breite von 50 mm parallel zur Maschinenrichtung (MD) aufweisen.

Die einzelnen Proben werden jeweils in der Mitte der Breitseite fadengerade und parallel zur Längsseite 50 mm eingeschnitten und unterhalb des Einschnitts mittig und parallel zur Längsseite mit einem doppelseitigen Klebeband mit einer Breite von 20 mm und einer Länge von 90 mm versehen. Mittels eines Markers wird eine lineare Verlängerungslinie des Einschnitts aufgemalt, welche als gerade, lineare Reißlinie zum Messen der Abweichung dient.

Die Bestimmung des Reißverhaltens der einzelnen Proben wird bei Normalklima (DIN 50014-23/50-2) durchgeführt. Dazu wird ein Schenkel der einzelnen Proben jeweils mit Hilfe des aufgeklebten doppelseitigen Klebebandes in einem definierten Winkel von 45°C [β] auf einer Metallschiene mit einer Breite von 100 mm und einer Länge von 350 mm fixiert.

Die Metallschiene wird in die untere Spannklemme eines elektronischen Zerreißgerätes (Zwick) eingespannt. Das eingeschnittene Ende des nicht fixierten Schenkels ("das nicht fixierte Hosenbein") der einzelnen Proben wird mit Hilfe eines doppelseitigen Klebebandes an einem ca. 400 mm langen, steifen Folienstreifen fixiert und dieser wird in die obere Spannklemme des Zerreißgerätes eingespannt.

Die beiden Schenkel der einzelnen Proben werden nun bis zur vollständigen Teilung der Probe unter einem Winkel von 175° und mit einer Geschwindigkeit von 500 mm/min auseinandergezogen.

Für die Beurteilung des linearen Weiterreißverhaltens der Proben wird die maximale Abweichung A des Risses in mm gegenüber der Markierungslinie (gerader, linearer Riss in Verlängerung des Einschnitts) am Probenende ermittelt.

Aus den gemessenen maximalen Abweichungen A der 10 Proben mit den Maßen 100 mm (MD) x 50 mm (CD) wird der Mittelwert gebildet. Dieser dient zur Beurteilung des linearen Reißverhaltens in Maschinenrichtung (MD).

Dementsprechend wird aus den gemessenen maximalen Abweichungen A der 10 Proben mit den Maßen 100 mm (CD) x 50 mm (MD) ebenfalls der Mittelwert gebildet. Dieser dient zur Beurteilung des linearen Reißverhaltens quer zur Maschinenrichtung (CD).

### Beispiele:

Die nachfolgenden Beispiele und Vergleichsbeispiele dienen der Erläuterung der Erfindung, sind jedoch nicht einschränkend auszulegen.

### I. Chemische Charakterisierung der eingesetzten Rohstoffe:

| | |
|---|---|
| Lupolen 2420 F: | LDPE der Firma Basell; Dichte (ISO 1183): 0.927 g/cm³; Schmelztemperatur (ISO 3146): 114 °C |
| Innovex LL 0209 AA: | LLDPE der Firma Ineos; enthält 1-Buten als Comonomer; Dichte (ISO 1183): 0.920 g/cm³ |
| Topas 6013 F - 04: | Norbornen/Ethylen Copolymer der Firma Ticona GmbH mit einer Glasübergangstemperatur von 138 °C, einer Viskositätszahl von 60 ml/g, und einem Norbornen-Gehalt von ca. 79 Gew.% |

### II. Herstellung der erfindungsgemäßen Mehrschichtfolien sowie der mehrschichtigen Vergleichsfolien

Die Mehrschichtfolien des Vergleichsbeispiels **(V1)** sowie des Beispiels (**B1**) bestehen jeweils aus drei Schichten und weisen eine Gesamtschichtdicke von jeweils 60 µm auf. Die einzelnen Schichten der Mehrschichtfolien **V1** und **B1** grenzen jeweils in der Reihenfolge unmittelbar aneinander an, in der sie nachstehend aufgeführt sind. Die einzelnen Schichten der Mehrschichtfolien **V1** und **B1** weisen jeweils eine Schichtdicke von 20 µm auf und wurden jeweils durch Blasfolien-Co-Extrusion hergestellt. Das Aufblasverhältnis betrug jeweils 2 : 1.

### III. Beispiel und Vergleichsbeispiel

Alle nachfolgenden %-Angaben sind jeweils Gew.-%.

### III.1 Beispiel 1

Schicht (a) (20 µm): 100% Lupolen 2420 F
Schicht (b) (20 µm): 70% Lupolen 2420 F und 30% Topas 6013 F - 04
Schicht (c) (20 µm): 100% Lupolen 2420 F

### III.2 Vergleichsbeispiel 1

Schicht (a) (20 µm): 100% Innovex LL 0209 AA
Schicht (b) (20 µm): 70% Innovex LL 0209 AA und 30% Topas 6013 F - 04
Schicht (c) (20 µm): 100% Innovex LL 0209 AA

### IV. Bestimmung der Elmendorf-Reißfestigkeit, der Durchstoßfestigkeit und der Abweichung zum geraden, linearen Riss

Für die Mehrschichtfolie des Beispiels (**B1**) sowie des Vergleichsbeispiels (**V1**) wurden jeweils nach den vorstehend beschriebenen Methoden die Reißfestigkeit (Elmendorf) in Maschinenrichtung (MD) und quer zur Maschinenrichtung (CD) und die Durchstoßfestigkeit sowie die Abweichung zum geraden, linearen Riss beim Weiterreißen in Maschinenrichtung (MD) und quer zur Maschinenrichtung (CD) ermittelt.

| Beispiel/Vergleichsbeispiel | Weiterreißkraft | | Durchstoßfestigkeit | Abweichung A | |
|---|---|---|---|---|---|
| | [mN] | | [N] | [mm] | |
| | MD | CD | | MD | CD |
| **V1** | 1550 | 1020 | 32 | 25 | 19,5 |
| **B1** | 400 | 450 | 55 | 1,5 | 4,5 |

## Patentansprüche

1. Eine Mehrschichtfolie umfassend eine Schichtfolge aus
(a) einer Schicht (a) basierend auf wenigstens einem Polyethylen mit einer niedrigen Dichte (LDPE) im Bereich von 0,915 bis 0,930 g/cm³ oder einer Mischung aus (α) wenigstens einem Polyethylen mit einer niedrigen Dichte (LDPE) im Bereich von 0,915 bis 0,930 g/cm³ und aus (β) wenigstens einem nicht cyclischen C₂ - C₆ Olefin Homo- oder Copolymeren, das sich von der Polyethylen-Komponente (α) unterscheidet,
(b) einer Schicht (b) basierend auf einer Mischung aus wenigstens einem Polyethylen mit einer niedrigen Dichte (LDPE) im Bereich von 0,915 bis 0,930 g/cm³ und wenigstens einem Cyclo-Olefin-Copolymeren, und
(c) einer Schicht (c) basierend auf wenigstens einem Polyethylen mit einer niedrigen Dichte (LDPE) im Bereich von 0,915 bis 0,930 g/cm³ oder einer Mischung aus (α) wenigstens einem Polyethylen mit einer niedrigen Dichte (LDPE) im Bereich von 0,915 bis 0,930 g/cm³ und aus (β) wenigstens einem nicht cyclischen C₂ - C₆ Olefin Homo- oder Copolymeren, das sich von der Polyethylen-Komponente (α) unterscheidet,
**dadurch gekennzeichnet, dass** die Schicht (a) bzw. die Schicht (c) jeweils eine Schichtdicke von 5 µm bis 25 µm und die Schicht (b) eine Schichtdicke von 5 µm bis 30 µm aufweist, wobei die Weiterreißkraft der Mehrschichtfolie sowohl in Maschinenrichtung als auch quer zur Maschinenrichtung höchstens 1000 mN und das Verhältnis der Weiterreißkraft in Maschinenrichtung zur Weiterreißkraft quer zur Maschinenrichtung von 2 : 1 bis 1 : 2, jeweils bestimmt nach dem Elmendorf-Test gemäß DIN EN ISO 6383-2, beträgt.

2. Eine Mehrschichtfolie nach Anspruch 1, **dadurch gekennzeichnet, dass** die Mehrschichtfolie ein Verhältnis der Weiterreißkraft in Maschinenrichtung zur Weiterreißkraft quer zur Maschinenrichtung von 1,5 : 1 bis 1 : 1,5 bestimmt nach dem Elmendorf-Test gemäß DIN EN ISO 6383-2, aufweist.

3. Eine Mehrschichtfolie nach Anspruch 1 oder 2, **dadurch gekennzeichnet, dass** die Weiterreißkraft der Mehrschichtfolie sowohl in Maschinenrichtung als auch quer zur Maschinenrichtung höchstens 800 mN, bestimmt nach dem Elmendorf-Test gemäß DIN EN ISO 6383-2, beträgt.

4. Eine Mehrschichtfolie nach einem der Ansprüche 1 - 3, **dadurch gekennzeichnet, dass** die Durchstoßfestigkeit der Mehrschichtfolie mindestens 50 N, bestimmt nach ASTM E 154-88 Teil 10, beträgt.

5. Eine Mehrschichtfolie nach einem der Ansprüche 1 - 4, **dadurch gekennzeichnet, dass** das Polyethylen (LDPE) der Schichten (a), (b) und (c) jeweils eine Dichte im Bereich von 0,920 bis 0,927 g/cm³ aufweist.

6. Eine Mehrschichtfolie nach einem der Ansprüche 1 - 4, **dadurch gekennzeichnet, dass** die Schicht (a) bzw. (c) aus einer Mischung aus (α) wenigstens einem Polyethylen (LDPE) mit einer Dichte von 0,920 bis 0,927 g/cm³ und aus (β) wenigstens einem Polypropylen und/oder Propylen Copolymeren aufgebaut ist.

7. Eine Mehrschichtfolie nach Anspruch 6, **dadurch gekennzeichnet, dass** die Mischung aus (α) und (β) wenigstens 50 Gew.%, vorzugsweise wenigstens 70 Gew.%, bezogen auf das Gesamtgewicht der Polymer-Komponenten (α) und (β), der Polyethylen-Komponente (α) aufweist.

8. Eine Mehrschichtfolie nach einem der Ansprüche 1 - 7, **dadurch gekennzeichnet, dass** das Cycloolefin-Copolymere der Schicht (b) eine Glasübergangstemperatur T_{g} von wenigstens 60°C, vorzugsweise mindestens 80°C und ganz besonders bevorzugt mindestens 100°C, bestimmt nach ISO 11357-1, -2,-3 (DSC), aufweist.

9. Eine Mehrschichtfolie nach einem der Ansprüche 1 - 8, **dadurch gekennzeichnet, dass** das Cycloolefin-Copolymere der Schicht (b) ein (C₆-C₁₂)-Cycloolefin-(C₂-C₄)-Olefin Copolymeres, vorzugsweise ein Norbornen/Ethylen-Copolymeres, ist.

10. Eine Mehrschichtfolie nach einem der Ansprüche 1 - 9, **dadurch gekennzeichnet, dass** der Cycloolefin-Anteil des Cycloolefin-Copolymeren der Schicht (b) mindestens 50 Gew.%, besonders bevorzugt mindestens 70 Gew.%, bezogen auf das Gesamtgewicht des Cycloolefin-Copolymeren, beträgt.

11. Eine Mehrschichtfolie nach einem der Ansprüche 1 - 10, **dadurch gekennzeichnet, dass** der Anteil der Cycloolefin-Copolymer Komponente in der Schicht (b) höchstens 50 Gew.%, bevorzugt höchstens 40 Gew.-%, und besonders bevorzugt 20 - 35 Gew.%, bezogen auf das Gesamtgewicht der Polymer-Komponenten der Schicht (b), beträgt.

12. Eine Mehrschichtfolie nach einem der Ansprüche 1 - 11, **dadurch gekennzeichnet, dass** die Gesamtdicke der Schichtfolge (a)-(c) mindestens 30%, vorzugsweise 50% bis 100%, bezogen auf die Gesamtdicke der Mehrschichtfolie, beträgt.

13. Eine Mehrschichtfolie nach einem der Ansprüche 1-12, **dadurch gekennzeichnet, dass** die in Form eines vorzugsweise coextrudierten Folienschlauchs produzierte Schichtfolge (a)-(c) oder die in Form eines vorzugsweise coextrudierten Folienschlauchs vorliegende Mehrschichtfolie ein Aufblasverhältnis von mindestens 1 : 1, vorzugsweise mindestens 1,5 : 1, besonders bevorzugt mindestens 2 : 1, aufweist.

14. Eine Mehrschichtfolie nach einem der Ansprüche 1 - 12, **dadurch gekennzeichnet, dass** die teilweise oder insgesamt als Castfolie hergestellte Mehrschichtfolie zumindest monoaxial ein Reckverhältnis von mindestens 1:1,5, vorzugsweise mindestens 1: 2, besonders bevorzugt 1 : 2 bis 1 : 4 oder biaxial ein Reckverhältnis von Längs- zu Querreckung von mindestens 1 : 1, vorzugsweise mindestens 1,1 : 1, besonders bevorzugt mindestens 1,2 : 1 aufweist.

15. Eine Mehrschichtfolie nach einem der Ansprüche 1 - 14, **dadurch gekennzeichnet, dass** die Mehrschichtfolie neben der Schichtfolge (a)-(c) wenigstens eine Schicht (e) basierend auf wenigstens einem thermoplastischen Polymeren, vorzugsweise ausgewählt aus der Gruppe umfassend Polyolefine, Polyamide, Polyester, Polystyrole und Copolymere aus wenigstens zwei Monomeren der genannten Polymere, besonders bevorzugt Olefin-Homo- oder Copolymere und/oder Polyester als Trägerschicht aufweist.

16. Eine Mehrschichtfolie nach einem der Ansprüche 1 - 15, **dadurch gekennzeichnet, dass** die Mehrschichtfolie auf wenigstens einer ihrer Oberflächen zumindest teilweise mit einer Klebeschicht ausgerüstet ist.

17. Eine Mehrschichtfolie nach einem der Ansprüche 1 - 16, **dadurch gekennzeichnet, dass** die Mehrschichtfolie bedruckt und/oder eingefärbt und/oder geprägt ist.

18. Eine Mehrschichtfolie nach einem der Ansprüche 1 - 17, **dadurch gekennzeichnet, dass** die Mehrschichtfolie neben der Schichtfolge (a)-(c) wenigstens eine Barriereschicht (d), vorzugsweise basierend auf wenigstens einem Ethylen-Vinylalkohol-Copolymeren, wenigstens einem Polyvinylalkohol, wenigstens einem Metall, vorzugsweise Aluminium, oder wenigstens einem Metalloxid, vorzugsweise SiOx oder Aluminiumoxid, aufweist.

19. Verwendung einer Mehrschichtfolie nach einem der Ansprüche 1 - 18 als Verpackungsmaterial.

20. Verwendung einer Mehrschichtfolie nach Anspruch 19 zur Herstellung eines Verpackungselements und/oder einer Verpackung, vorzugsweise einer Beutelverpackung, einer Einzelportionsverpackung, eines Sachets oder eines Stickpacks.

21. Eine leicht zu öffnende Verpackung, vorzugsweise in Form einer Beutelverpackung, einer Einzelportionsverpackung, eines Sachets oder eines Stickpacks, oder ein leicht zu öffnendes Verpackungselement, vorzugsweise ein Deckel, jeweils aus einer Mehrschichtfolie nach einem der Ansprüche 1 - 18.

22. Eine Mehrschichtfolie nach einem der Ansprüche 1 - 17, **dadurch gekennzeichnet, dass** die Mehrschichtfolie an wenigstens einer ihrer Oberflächen eine Releaseschicht, vorzugsweise basierend auf wenigstens einem ausgehärteten Polysiloxan, aufweist.

23. Verwendung einer Mehrschichtfolie nach Anspruch 22 als Schutz- und Trennfolie.

24. Eine Schutz- und Trennfolie, vorzugsweise für Klebebänder, aus einer Mehrschichtfolie nach einem der Ansprüche 1 - 17.

## Claims

1. A multilayer film comprising a layer sequence of
(a) a layer (a) based on at least one low-density polyethylene (LDPE) with a density in the range from 0.915 to 0.930 g/cm³ or a mixture of (α) at least one low-density polyethylene (LDPE) with a density in the range from 0.915 to 0.930 g/cm³ and of (β) at least one non-cyclic C₂-C₆ olefin homo- or copolymer which differs from polyethylene component (α),
(b) a layer (b) based on a mixture of at least one low-density polyethylene (LDPE) with a density in the range from 0.915 to 0.930 g/cm³ and at least one cycloolefin copolymer, and
(c) a layer (c) based on at least one low-density polyethylene (LDPE) with a density in the range from 0.915 to 0.930 g/cm³ or a mixture of (α) at least one low-density polyethylene (LDPE) with a density in the range from 0.915 to 0.930 g/cm³ and of (β) at least one non-cyclic C₂-C₆ olefin homo- or copolymer which differs from polyethylene component (α),
**characterized in that** the thickness of the layer (a) and, respectively, the layer (c) is in each case from 5 µm to 25 µm and the thickness of the layer (b) is from 5 µm to 30 µm, whereby the tear propagation force for the multilayer film both in machine direction and perpendicularly to the machine direction is at most 1000 mN, and the ratio of the tear propagation force in machine direction to the tear propagation force perpendicularly to the machine direction, in each case determined by the Elmendorf test in accordance with DIN EN ISO 6383-2, is from 2:1 to 1:2.

2. The multilayer film as claimed in claim 1, **characterized in that** the ratio of the tear propagation force in machine direction to the tear propagation force perpendicularly to the machine direction, determined by the Elmendorf test in accordance with DIN EN ISO 6383-2 for the multilayer film, is from 1.5:1 to 1:1.5.

3. The multilayer film as claimed in claim 1 or 2, **characterized in that** the tear propagation force of the multilayer film both in machine direction and perpendicularly to the machine direction is at most 800 mN, determined by the Elmendorf test in accordance with DIN EN ISO 6383-2.

4. The multilayer film as claimed in any of claims 1-3, **characterized in that** the puncture resistance of the multilayer film is at least 50 N, determined in accordance with ASTM E154-88 part 10.

5. The multilayer film as claimed in any of claims 1-4, **characterized in that** the density of the polyethylene (LDPE) of each of the layers (a), (b), and (c) is in the range from 0.920 to 0.927 g/cm³.

6. The multilayer film as claimed in any of claims 1-4, **characterized in that** the layer (a) and, respectively, (c) is composed of a mixture of (α) at least one polyethylene (LDPE) with a density of from 0.920 to 0.927 g/cm³ and of (β) at least one polypropylene and/or propylene copolymer.

7. The multilayer film as claimed in claim 6, **characterized in that** the mixture of (α) and (β) comprises at least 50% by weight, preferably at least 70% by weight, based on the total weight of polymer components (α) and (β), of the polyethylene component (α).

8. The multilayer film as claimed in any of claims 1-7, **characterized in that** the glass transition temperature Tg of the cycloolefin copolymer of the layer (b), determined in accordance with ISO 11357-1, -2, -3 (DSC), is at least 60°C, preferably at least 80°C, and very particularly preferably at least 100°C.

9. The multilayer film as claimed in any of claims 1-8, **characterized in that** the cycloolefin copolymer of the layer (b) is a (C₆-C₁₂) - cycloolefin-(C₂-C₄)-olefin copolymer, preferably a norbornene/ethylene copolymer.

10. The multilayer film as claimed in any of claims 1-9, **characterized in that** the cycloolefin proportion of the cycloolefin copolymer of the layer (b) is at least 50% by weight, particularly preferably at least 70% by weight, based on the total weight of the cycloolefin copolymer.

11. The multilayer film as claimed in any of claims 1-10, **characterized in that** the proportion of the cycloolefin copolymer component in the layer (b) is at most 50% by weight, preferably at most 40% by weight, and particularly preferably from 20 to 35% by weight, based on the total weight of polymer components of the layer (b).

12. The multilayer film as claimed in any of claims 1-11, **characterized in that** the total thickness of the layer sequence (a)-(c) is at least 30%, preferably from 50% to 100%, based on the total thickness of the multilayer film.

13. The multilayer film as claimed in any of claims 1-12, **characterized in that** the blow-up ratio of the preferably coextruded layer sequence (a)-(c) in form of a tubular film or a preferably coextruded multilayer film in form of a tubular film is at least 1:1, preferably at least 1.5:1, particularly preferably at least 2:1.

14. The multilayer film as claimed in any of claims 1-12, **characterized in that** the multilayer film produced to some extent or entirely in form of cast film at least has a monoaxial orientation ratio of at least 1:1.5, preferably at least 1:2, particularly preferably from 1:2 to 1:4, or a biaxial orientation ratio of longitudinal to transverse orientation of at least 1:1, preferably at least 1.1:1, particularly preferably at least 1.2:1.

15. The multilayer film as claimed in any of claims 1-14, **characterized in that** the multilayer film comprises, as substrate layer, besides the layer sequence (a)-(c), at least one layer (e) based on at least one thermoplastic polymer, preferably selected from the group comprising polyolefins, polyamides, polyesters, polystyrenes, and copolymers of at least two monomers from the polymers mentioned, particularly preferably olefin homo- or copolymers and/or polyesters.

16. The multilayer film as claimed in any of claims 1-15, **characterized in that** the multilayer film has on at least one of its surfaces, at least to some extent an adhesive layer.

17. The multilayer film as claimed in any of claims 1-16, **characterized in that** the multilayer film is printed, and/or colored, and/or embossed.

18. The multilayer film as claimed in any of claims 1-17, **characterized in that** the multilayer film comprises, besides the layer sequence (a)-(c), at least one barrier layer (d), preferably based on at least one ethylene-vinyl alcohol copolymer, on at least one polyvinyl alcohol, on at least one metal, preferably aluminum, or on at least one metal oxide, preferably SiOx or aluminum oxide.

19. The use of a multilayer film as claimed in any of claims 1-18 as packaging material.

20. The use of a multilayer film as claimed in claim 21 for the production of a packaging element and/or of packaging, preferably of bag packaging, of single-portion packaging, of a sachet, or of a stickpack.

21. An easy-to-open packaging, preferably in the form of bag packaging, of single-portion packaging, of a sachet, or of a stickpack, or an easy-to-open packaging element, preferably a lid, in each case made of a multilayer film as claimed in any of claims 1-18.

22. The multilayer film as claimed in any of claims 1-17, **characterized in that** the multilayer film has, on at least one of its surfaces, a release layer, preferably based on at least one cured polysiloxane.

23. The use of a multilayer film as claimed in claim 22 as protective and release film.

24. A protective and release film, preferably for adhesive tapes, made of a multilayer film as claimed in any of claims 1-17.

## Revendications

1. Feuille multicouche, comprenant une succession de couches constituée par
(a) une couche (a) à base d'au moins un polyéthylène présentant une basse densité (LDPE) dans la plage de 0,915 à 0,930 g/cm³ ou d'un mélange de (α) au moins un polyéthylène présentant une basse densité (LDPE) dans la plage de 0,915 à 0,930 g/cm³ et de (ß) au moins un homopolymère ou copolymère d'une C₂-C₆-oléfine non cyclique, qui se distingue du composant de polyéthylène (α),
(b) une couche (b) à base d'un mélange d'au moins un polyéthylène présentant une basse densité (LDPE) dans la plage de 0,915 à 0,930 g/cm³ et d'au moins un copolymère de cyclooléfine, et
(c) une couche (c) à base d'au moins un polyéthylène présentant une basse densité (LDPE) dans la plage de 0,915 à 0,930 g/cm³ ou d'un mélange de (α) au moins polyéthylène présentant une basse densité (LDPE) dans la plage de 0,915 à 0,930 g/cm³ et de (ß) au moins un homopolymère ou copolymère d'une C₂-C₆-oléfine non cyclique, qui se distingue du composant de polyéthylène (α),
**caractérisée en ce que** la couche (a) ou la couche (c) présente à chaque fois une épaisseur de couche de 5 µm à 25 µm et la couche (b) présente une épaisseur de couche de 5 µm à 30 µm, la force de propagation d'une déchirure amorcée de la feuille multicouche, tant dans le sens machine que transversalement par rapport au sens machine, étant d'au plus 1000 mN et le rapport de la force de propagation d'une déchirure amorcée dans le sens machine à la force de propagation d'une déchirure amorcée transversalement par rapport au sens machine étant de 2:1 à 1:2, à chaque fois déterminée selon le test d'Elmendorf selon la norme DIN EN ISO 6383-2.

2. Feuille multicouche selon la revendication 1, **caractérisée en ce que** la feuille multicouche présente un rapport de la force de propagation d'une déchirure amorcée dans le sens machine à la force de propagation d'une déchirure amorcée transversalement par rapport au sens machine de 1,5:1 à 1:1,5, déterminée selon le test d'Elmendorf selon la norme DIN EN ISO 6383-2.

3. Feuille multicouche selon la revendication 1 ou 2, **caractérisée en ce que** la force de propagation d'une déchirure amorcée, tant dans le sens machine que transversalement par rapport au sens machine, est d'au plus 800 mN, déterminée selon le test d'Elmendorf selon la norme DIN EN ISO 6383-2.

4. Feuille multicouche selon l'une quelconque des revendications 1 à 3, **caractérisée en ce que** la résistance à la perforation de la feuille multicouche est d'au moins 50 N, déterminée selon la norme ASTM E 154-88 partie 10.

5. Feuille multicouche selon l'une quelconque des revendications 1 à 4, **caractérisée en ce que** le polyéthylène (LDPE) des couches (a), (b) et (c) présente à chaque fois une densité dans la plage de 0,920 à 0,927 g/cm³.

6. Feuille multicouche selon l'une quelconque des revendications 1 à 4, **caractérisée en ce que** la couche (a) ou (c) est constituée par un mélange de (α) au moins un polyéthylène (LDPE) présentant une densité de 0,920 à 0,927 g/cm³ et de (ß) au moins un polypropylène et/ou copolymère de propylène.

7. Feuille multicouche selon la revendication 6, **caractérisée en ce que** le mélange de (α) et de (ß) présente au moins 50% en poids, de préférence au moins 70% en poids, par rapport au poids total des composants polymères (α) et (ß), du composant de polyéthylène (α).

8. Feuille multicouche selon l'une quelconque des revendications 1 à 7, **caractérisée en ce que** le copolymère de cyclooléfine de la couche (b) présente une température de transition vitreuse Tg d'au moins 60 °C, de préférence d'au moins 80 °C et de manière tout particulièrement préférée d'au moins 100°C, déterminée selon la norme ISO 11357-1, -2,-3 (DSC - Calorimétrie différentielle par balayage).

9. Feuille multicouche selon l'une quelconque des revendications 1 à 8, **caractérisée en ce que** le copolymère de cyclooléfine de la couche (b) est un copolymère de (C₆-C₁₂)-cyclooléfine-(C₂-C₉)-oléfine, de préférence un copolymère de norbornène/éthylène.

10. Feuille multicouche selon l'une quelconque des revendications 1 à 9, **caractérisée en ce que** la proportion de cyclooléfine du copolymère de cyclooléfine de la couche (b) est d'au moins 50% en poids, de manière particulièrement préférée d'au moins 70% en poids, par rapport au poids total du copolymère de cyclooléfine.

11. Feuille multicouche selon l'une quelconque des revendications 1 à 10, **caractérisée en ce que** la proportion du composant de copolymère de cyclooléfine dans la couche (b) est d'au plus 50% en poids, de préférence d'au plus 40% en poids et de manière particulièrement préférée de 20-35% en poids, par rapport au poids total des composants polymères de la couche (b).

12. Feuille multicouche selon l'une quelconque des revendications 1 à 11, **caractérisée en ce que** l'épaisseur totale de la succession de (a)-(c) représente au moins 30%, de préférence de 50% à 100%, par rapport à l'épaisseur totale de la feuille multicouche.

13. Feuille multicouche selon l'une quelconque des revendications 1 à 12, **caractérisée en ce que** la succession de couches (a)-(c) produite sous forme d'un tube flexible de feuille de préférence coextrudé ou la feuille multicouche se trouvant sous forme d'un tube flexible de feuille de préférence coextrudé présente un rapport de soufflage d'au moins 1:1, de préférence d'au moins 1,5:1, de manière particulièrement préférée d'au moins 2:1.

14. Feuille multicouche selon l'une quelconque des revendications 1 à 12, **caractérisée en ce que** la feuille multicouche préparée, partiellement ou totalement, comme feuille moulée présente un rapport d'étirage, au moins monoaxialement, d'au moins 1:1,5, de préférence d'au moins 1:2, de manière particulièrement préférée d'au moins 1:2 à 1:4 ou, biaxialement, un rapport d'étirage de l'étirage longitudinal à l'étirage transversal d'au moins 1:1, de préférence d'au moins 1,1:1, de manière particulièrement préférée d'au moins 1,2:1.

15. Feuille multicouche selon l'une quelconque des revendications 1 à 14, **caractérisée en ce que** la feuille multicouche présente, en plus de la succession de couches (a)-(c), au moins une couche (e), basée sur au moins un polymère thermoplastique, de préférence choisi dans le groupe comprenant les polyoléfines, les polyamides, les polyesters, les polystyrènes et les copolymères d'au moins deux monomères des polymères mentionnés, de manière particulièrement préférée les homopolymères ou les copolymères oléfiniques et/ou les polyesters, comme couche support.

16. Feuille multicouche selon l'une quelconque des revendications 1 à 15, **caractérisée en ce que** la feuille multicouche est pourvue sur au moins une de ses surfaces, au moins partiellement, d'une couche adhésive.

17. Feuille multicouche selon l'une quelconque des revendications 1 à 16, **caractérisée en ce que** la feuille multicouche est imprimée et/ou colorée et/ou gaufrée.

18. Feuille multicouche selon l'une quelconque des revendications 1 à 17, **caractérisée en ce que** la feuille multicouche présente, en plus de la succession de couches (a)-(c), au moins une couche formant une barrière (d), de préférence à base d'au moins un copolymère d'éthylène-alcool vinylique, d'au moins un poly(alcool vinylique), d'au moins un métal, de préférence de l'aluminium, ou d'au moins un oxyde métallique, de préférence SiOx ou de l'oxyde d'aluminium.

19. Utilisation d'une feuille multicouche selon l'une quelconque des revendications 1 à 18 comme matériau d'emballage.

20. Utilisation d'une feuille multicouche selon la revendication 19 pour la fabrication d'un élément d'emballage et/ou d'un emballage, de préférence d'un emballage de type sac, d'un emballage de portions individuelles, d'un sachet ou d'un sachet-dose.

21. Emballage facile à ouvrir, de préférence sous forme d'un emballage de type sac, d'un emballage de portions individuelles, d'un sachet ou d'un sachet-dose, ou élément d'emballage facile à ouvrir, de préférence un couvercle, à chaque fois constitué par une feuille multicouche selon l'une quelconque des revendications 1 à 18.

22. Feuille multicouche selon l'une quelconque des revendications 1 à 17, **caractérisée en ce que** la feuille multicouche présente, sur au moins une de ses surfaces, une couche antiadhésive, de préférence à base d'au moins un polysiloxane durci.

23. Utilisation d'une feuille multicouche selon la revendication 22 comme feuille de protection et de séparation.

24. Feuille de protection et de séparation, de préférence pour rubans adhésifs, en une feuille multicouche selon l'une quelconque des revendications 1-17.
